# EUROPEAN PATENT APPLICATION

(11) **EP 2 007 033 A1**
(43) Date of publication of application: **24.12.2008**
(21) Application number: 07301131.4
(22) Date of filing: 19.06.2007
(51) Int. Cl.: H04B 7/26

(54) **Method and system to synchronize a GSM device**

(71) Applicant: MOTOROLA, INC., Schaumburg, IL 60196 (US)
(72) Inventor: Ligonniere, Philippe, 31500 Toulouse (FR); Peyrusse, Olivier, 31000 Toulouse (FR); Ulmer, Lionel, 31000 Toulouse (FR)
(74) Representative: Joly, Jean-Jacques

(57) **Abstract**

A global system for mobile communications (GSM) mobile station (205) acquires and decodes a frequency channel (FCH) signal using unallocated frames in a half-rate traffic channel in a GSM network (215). The mobile station 205 also uses the unallocated frames to acquire and decode a synchronization channel (SCH) signal and to verify a base station identification code (BSIC) from the neighbor cell using the unallocated frames in the half-rate traffic channel. When the base station identification code (BSIC) is verified, the mobile station (205) is synchronized and hands off to the neighbor cell.

## Description

### BACKGROUND

The disclosure relates to global system for mobile communication (GSM) networks. In particular, the disclosure relates to synchronization processes for a GSM device using unallocated frames in a half-rate sub-channel.

A key indicator of call performance on wireless systems is the drop call rate (DCR). Operators are continuously pushing for lower DCR on their network and may use this measurement as a commercial advantage.

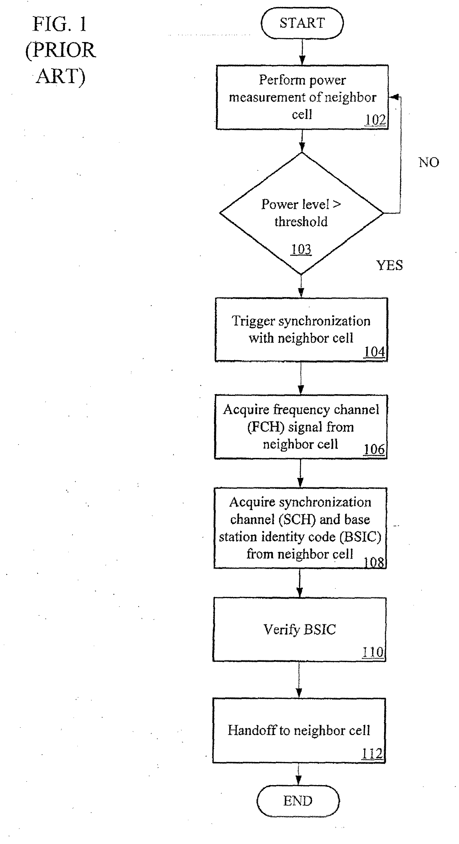

FIG. 1 illustrates a conventional synchronization process for a Global System for Mobile Communications (GSM) wireless device. The GSM device performs a power measurement of a neighbor cell, at step 102. If the measured power from the neighbor cell is greater than a predetermined threshold level (step 103), the GSM device triggers a synchronization attempt with the neighbor cell, at step 104. The GSM device attempts to acquire a frequency channel (FCH) signal from the neighbor cell, at step 106. The GSM device opens a radio window of 11 timeslots during an idle frame, and searches for the FCH signal by processing a digital signal processing (DSP) packet of 32 in phase/quadrature (I/Q) samples, and discards the I/Q samples when done. The GSM device then attempts to acquire and decode a synchronization channel (SCH) and base station identity code (BSIC) signal from the neighbor cell, at step 108.

The GSM device adjusts an automatic frequency control (AFC) with the estimation done on the FCH signal (and mixed with other cells), and opens a window (where timeslot synchronization has been done by decoding FCH) of one timeslot to acquire and decode the SCH. The GSM device then verifies the BSIC of the neighbor cell, at step 110, and hands off to the neighbor cell, at step 112.

The failure to hand-off to a new cell is a drop call contributor, thus the ability of the mobile to synchronize quickly and stay synchronized to the appropriate neighbor cells is important to ensure proper neighbor cells measurement reports to the network for handover procedure trigger.

For the mobile station (MS), there are two points on neighbor cells monitoring that are critical for handovers. The mobile should be able to get synchronized as fast as possible to a new neighbor cell that may appear in its surroundings. If the MS is not synchronized on the new cell, i.e. has not performed Base Station Identification Code (BSIC) verification, when the network requests a handover to this new cell, the MS will fail to perform the handover. As a consequence, the MS stays connected to its original cell and will likely drop the call

The mobile should be able to keep synchronized as often as possible with neighbor cells it is monitoring. Otherwise, there could be "BSIC confusion" on handover. This can happen when a mobile is moving forward from a first cell to a second cell, through a third cell. If the first cell and the second cell beacon channels are on same Absolute Radio Frequency Channel Number (ARFCN), and if the mobile has not synchronized to the second cell fast enough (to verify its BSIC), the network can request the mobile to hand-off from the third cell to the second cell, while the mobile is only synchronized with the first cell. The mobile would try to hand-off to the first cell which is no more the stronger cell, hence it will likely fail the handover, and finally drop the call.

One solution is to use adaptive multi-rate (AMR) Half-Rate channels. Despite its limitation in terms of voice quality, wide AMR Half-Rate use can benefit in regards to both blocking and to drop call rates by reducing the transitions from full-rate (FR) to half-rate (HR) and back again, and repeating the process. This limits intra-cell handovers and provides interference reduction that leads to significant improvements in drop call rates on the hopping layer for the same carried Erlangs. Use of AMR also provides easier Mobile Allocation Index Offset (MAIO) planning for frequency hopping and reduces the probability of blocking occurring.

Consequently, improving drop call rate in the Half-Rate case is particularly interesting for the customer. The need to speed up the acquisition of Frequency Channel (FCH) and Synchronization Channel (SCH) is not new. The actual technique is to first detect FCH in idle frames and then SCH. Another technique (published by Siemens) is the detection in parallel of FCH and SCH during idle frames. The gain is only 240ms. Therefore, a need exists for a method that provides appreciable gain.

### BRIEF DESCRIPTION OF THE DRAWINGS

Embodiments of the present disclosure are now described, by way of example only, with reference to the accompanying figures in which:

FIG. 1 illustrates a conventional synchronization process according to the

### prior art.

FIG. 2 illustrates an example 3G network.

FIG. 3 is a schematic block diagram of a 3G device.

FIG. 4 illustrates an example process for synchronizing a 3G device with a neighbor cell.

### DETAILED DESCRIPTION

The present disclosure is defined by the appended claims. This description summarizes some aspects of the present embodiments and should not be used to limit the claims. While the present disclosure may be embodied in various forms, there are shown in the drawings and will hereinafter be described some exemplary and nonlimiting embodiments, with the understanding that the present disclosure is to be considered an exemplification of the disclosure and is not intended to limit the disclosure to the specific embodiments illustrated.

In this application, the use of the disjunctive is intended to include the conjunctive. The use of definite or indefinite articles is not intended to indicate cardinality. In particular, a reference to "the" object or "a and an" object is intended to denote also one of a possible plurality of such objects.

In an example embodiment, the mobile station (MS) synchronizes as fast as possible to a new neighbor cell that may appear in its surroundings. If the MS is not synchronized on new cell, i.e. has not performed BSIC verification, and if the network requests a handover to this new cell, the MS will fail perform the handover. As a consequence, the MS will stay connected to its original cell and will likely drop the call.

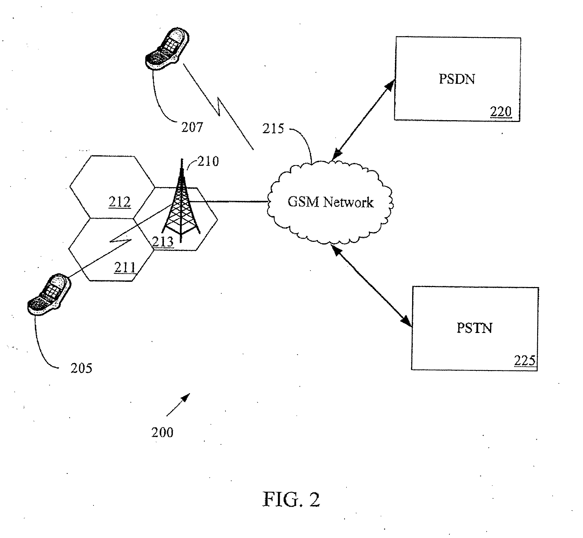

FIG. 2 is a schematic block diagram of a third generation (3G) wireless communications network 200. The network 200 includes a wireless mobile station (MS) 205, a second wireless MS 207, a base transceiver station BS 210, a Global System for Mobile Communications (GSM) network 215, a Public Switched Data Network (PSDN) 220, and a Public Switched Telephone Network (PSTN) 225. The GSM network 215 includes a plurality of serving cells (211, 212 and 213).

The MS 205 may be a cellular telephone configured to operate with the GSM protocol or other 3G protocol. The MS 205 may include other devices, such as MS 207, that transmit and receive data signals interoperable with the GSM protocol. The BS 210 contains radio frequency transmitters and receivers used to communicate directly with the MSs 205 and 207. In this type of cellular network, the MSs cannot communicate directly with each other but have to communicate with the BSs 210.

The GSM network 215 includes components that connect the MS 205 and the BS 210 with other components, such as the PSDN 220 and the PSTN 225. The GSM network 215 includes support nodes, servers, and gateways operable to transmit the data carried within the GSM network 215 and between the MS 205 and the PSDN 220 and/or the PSTN 225.

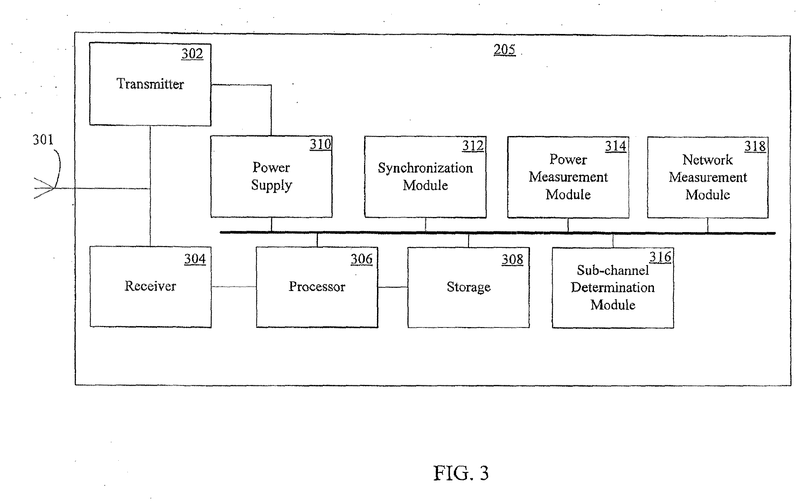

FIG. 3 illustrates a schematic block diagram of an example MS 205. The MS 205 includes an antenna 301, a transmitter 302, a receiver 304, a processor 306, a data storage 308, a power supply 310, a synchronization module 312, a power measurement module 314, a sub-channel determination module 316, and a network measurement module 318. In an exemplary embodiment, the antenna 301 may be coupled to both the transmitter 302 and the receiver 304, or the transmitter 302 and the receiver 304 may be connected to respective antenna units. In another exemplary embodiment, the processor 306, the storage 308, the power supply module 310, the synchronization module 312, the power measurement module 314, the sub-channel determination module 316, and the network measurement module 318 are coupled to each other through a communications bus 314. The communications bus 314 is operable to transmit control and communications signals from and between the components connected to the bus 314, such as power regulation, memory access instructions, and other system information. The processor 306 is coupled to the receiver 304, and the transmitter 302 is coupled to the receiver 304 and to the processor 306.

The MS 205 is configured to maintain synchronization as often as possible with neighbor cells it is monitoring. Otherwise, there could be a so-called "Base Station Identity Code (BSIC) confusion" on handover to a neighboring cell, such as when the MS 205 is moving forward from a first cell 211 in the GSM network 215 to a second cell 212 in the GSM network 215 through a third cell 213 in the GSM network 215. If the first cell 211 and second cell 212 beacon channels are on the same ARFCN, and if the MS has not yet synchronized to the second cell 212 fast enough (to verify its BSIC), the GSM network 215 can request the MS 205 to hand-off from the third cell 213 to the second cell 212, while the MS is only synchronized with the first cell 211. The MS 205 would try to hand-off to the first cell 211, which is no longer the stronger cell, and hence it will likely fail the handover, and finally drop the call.

In a half-rate (HR) transmission protocol, the MS 205 is allocated half of the time division multiple access (TDMA) traffic channel (TCH) frames in the 26 multi-frame structure. The remaining half of the TCH channels are allocated to another MS 207. Half-rate traffic channels, which are mostly used especially by North American operators when deploying AMR, free one TDMA frame out of every 2 in the 26-multiframe structure. The synchronization module 312 uses these TDMA frames of the unused half-rate sub-channel to start the process of acquisition of FCH/SCH of neighbor cells. This prevents waiting for idle frames occurrences.

During operation, the synchronization module 312 interacts with the power measurement module 314 to perform a power measurement of a neighbor cell. The sub-channel determination module 316 determines a GSM sub-channel associated with the half-rate TCH frames. The GSM sub-channel includes unallocated channels not used for transmission and reception by the GSM device. The synchronization module 312 then uses the unallocated channels to synchronize the MS 205 with the neighbor cell.

The synchronization module 312 is further configured to decode an FCH signal acquired by the MS 205 from the neighbor cell in the GSM network 115. The synchronization module 312 then decodes an SCH signal acquired by the GSM device from the neighbor cell. The synchronization module 312 verifies a base station identification code (BSIC) received by the GSM device from the neighbor cell. The MS 205 is further configured to hand off to the neighbor cell when the BSIC is verified.

Using the unallocated frames in a sub-channel allows more occurrences (unused half-rate sub-channel and idle frames) to acquire the FCH signal and the SCH signal during these slots, hence speeding up the acquisition time of a new neighbor cell. Moreover, it increases the synchronization rate as BSIC verification can be performed more often on neighbor cells.

By using the TDMA frames of unused half-rate sub-channel to start the acquisition/synchronization process, instead of waiting for idle frames, the average acquisition time of a new neighbor cell is decreased by a factor of 6. Also, the process allows more occurrences of SCH windows openings, hence reducing the risk for BSIC confusion. Moreover, idle frames that are not used for FCH/SCH acquisition could be used for other purposes like inter-RAT measurements (e.g. 3G RSSI measurements). In another exemplary embodiment, the network measurement module 318 is further configured to perform inter-radio access technology (inter-RAT) measurements. The network measurement module 318 may perform received signal strength indicator (RSSI) measurements, while the MS 205 is in communication with 2G cells in the GSM network 215.

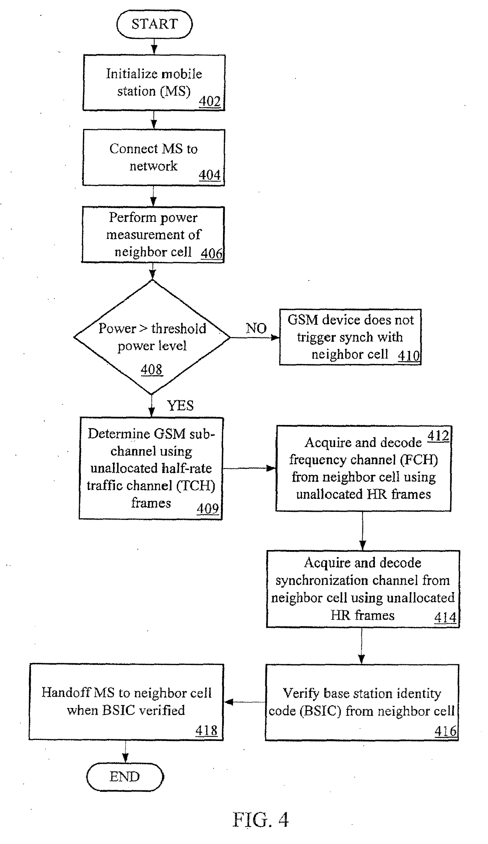

FIG. 4 illustrates an example acts for a process that synchronizes an MS 205 with a neighbor cell. The MS 205 may initialize, at step 402, such as by powering up, loading initialization parameters, network parameters, or other parameters. The MS 205 connects to the GSM network 215, at step 404. The MS 205 performs a power measurement, at step 406, to determine a power level transmitted by a neighbor cell. If the measured power level is greater than a predetermined threshold power level, at step 408, the MS 205 triggers a synchronization event and determines a GSM sub-channel using unallocated half-rate TCH frames, at step 409. If the measured power level is not greater than the predetermined threshold power level, the MS 205 does not trigger a synchronization event, at step 410.

The MS 205 uses the unallocated half-rate TCH frames in the determined sub-channel to acquire and decode the FCH signal from the neighbor cell, at step 412. The unallocated half-rate TCH frames allow the MS 205 to use frames that are not used for receiving and transmitting to acquire the FCH signal. When the MS 205 is established on a TCH/HS sub-channel, half of the TCH frames of the 26-multiframe are available for neighbor cells synchronization purpose. A user who is established on sub-channel #0, for example, only receives and transmits traffic frames on frames 0, 2, 4, 6, 8, 10, 13, 15, 17, 19, 21, 23. This means that frames 1, 3, 5, 7, 9, 11, 14, 16, 18, 20, 22, 24 are available for other purposes, such as acquiring the FCH signal. The MS 205 then acquires and decodes the SCH signal, at step 414, from the neighbor cell, using the unallocated frames of the HR TCH frames. The MS 205 verifies the BSIC received from the neighbor cell, at step 416. When the BSIC is verified, at step 418, the MS 205 hands off to the neighbor cell.

The use of the unallocated frames in half-rate traffic channels for FCH/SCH acquisition may reduce the minimum time to get synchronized on a new cell. The minimum time requires 2 frames, i.e. after 9.2 ms and requires 2 radio window openings at a best case. At worst, FCH and SCH acquisition takes 51 frames, i.e. 235.4 ms and needs 23 radio window openings. On average, the time required to decode both the FCH and the SCH is 28 TDMA frames, i.e. 129.2 ms and requires 9 radio window openings. With a conventional FCH/SCH acquisition procedure, in the best case, the time required to decode the FCH and the SCH is 240 ms and requires 2 radio window openings. In the worst case, the time required to decode the FCH and the SCH is 1560 ms and requires 12 radio window openings. On average, the time required to decode the FCH and the SCH is 900 ms and requires 7 radio window openings.

The methods shown in FIG. 4, the sequence diagrams may be encoded in a signal bearing medium, a computer readable medium such as a memory, programmed within a device such as one or more integrated circuits, or processed by a controller or a computer. If the methods are performed by software, the software may reside in a memory resident to or interfaced to the MS 205, a communication interface, or any other type of non-volatile or volatile memory interfaced or resident to the GSM network 215 or MS 205. The memory may include an ordered listing of executable instructions for implementing logical functions. A logical function may be implemented through digital circuitry, through source code, through analog circuitry, or through an analog source such as through an analog electrical, audio, or video signal. The software may be embodied in any computer-readable or signal-bearing medium, for use by, or in connection with an instruction executable system, apparatus, or device. Such a system may include a computer-based system, a processor-containing system, or another system that may selectively fetch instructions from an instruction executable system, apparatus, or device that may also execute instructions.

A "computer-readable medium," "machine-readable medium," "propagated-signal" medium, and/or "signal-bearing medium" may comprise any module that contains, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory such as a Random Access Memory "RAM" (electronic), a Read-Only Memory "ROM" (electronic), an Erasable Programmable Read-Only Memory (EPROM or Flash memory) (electronic), or an optical fiber (optical). A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

While the principles of the disclosure have been described above in connection with specific apparatus, it is to be clearly understood that this description is made only by way of example and not as a limitation on the scope of the disclosure. It is therefore intended that the foregoing detailed description be regarded as illustrative rather than limiting, and that it be understood that it is the following claims, including all equivalents, that are intended to define the spirit and scope of this disclosure.

## Claims

1. A method for synchronizing a global system for mobile communications (GSM) device with a neighbor cell, wherein the GSM device is configured to process half-rate traffic channel frames, the method comprising:
performing a power measurement of the neighbor cell using the GSM device;
determining a GSM sub-channel associated with the half-rate traffic channel frames, the GSM sub-channel comprising unallocated channels not used for transmission and reception by the GSM device; and
using the unallocated channels to synchronize the GSM device with the neighbor cell.

2. The method of claim 1, wherein using the unallocated channels comprises decoding a frequency channel signal acquired by the GSM device.

3. The method of claim 2, further comprising:
decoding a synchronization channel (SCH) signal acquired by the GSM device; and
verifying a base station identification code (BSIC) received by the GSM device from the neighbor cell.

4. The method of claim 3, further comprising handing the GSM device off to the neighbor cell when the BSIC is verified.

5. The method of claim 1, wherein the GSM sub-channel comprises 26 time division multiple access (TDMA) multi-frames.

6. A method for processing half-rate traffic channel frames with a global system for mobile communications (GSM) device, the method comprising:
performing a power measurement of a neighbor network cell using the GSM device;
determining a GSM sub-channel associated with the half-rate traffic channel frames, the GSM sub-channel comprising unallocated channels not used for transmission and reception by the GSM device; and
processing the unallocated channels by the GSM device to perform a network measurement.

7. The method of claim 6, wherein processing the unallocated channels comprises performing inter-radio access technology (inter-RAT) measurements.

8. The method of claim 7, wherein performing inter-RAT measurements comprises performing received signal strength indicator measurements on third generation cells in a GSM network, while the GSM device is in communication with second generation cells in the GSM network.

9. The method of claim 6, wherein processing the unallocated channels comprises decoding a frequency channel (FCH) signal acquired by the GSM device.

10. The method of claim 9, further comprising:
decoding a synchronization channel (SCH) signal acquired by the GSM device; and
verifying a base station identification code (BSIC) received by the GSM device from the neighbor network cell.

11. The method of claim 10, further comprising handing the GSM device off to the neighbor network cell when the base station identification code (BSIC) is verified.

12. A global system for mobile communications (GSM) wireless device, wherein the GSM wireless device is configured to process half-rate traffic channel frames, the GSM wireless device comprising:
a power measurement module operable to perform a power measurement of the neighbor cell using the GSM device;
a sub-channel determination module configured to determine a GSM sub-channel associated with the half-rate traffic channel frames, the GSM sub-channel comprising unallocated channels not used for transmission and reception by the GSM device; and
a synchronization module configured to synchronize the GSM device with the neighbor cell using the unallocated channels.

13. The GSM wireless device of claim 12, wherein the synchronization module is configured to decode a frequency channel (FCH) signal acquired by the GSM device.

14. The GSM wireless device of claim 13, wherein the synchronization module is configured to decode a synchronization channel (SCH) signal acquired by the GSM device and to verify a base station identification code (BSIC) received by the GSM device from the neighbor cell.

15. The GSM wireless device of claim 14, wherein the synchronization module is configured to hand the GSM device off to the neighbor cell when the BSIC is verified.

16. The GSM wireless device of claim 12, wherein the GSM sub-channel comprises 26 time division multiple access (TDMA) multi-frames.

17. A global system for mobile communications (GSM) wireless device, wherein the GSM wireless device is configured to process half-rate traffic channel frames, the GSM wireless device comprising:
a power measurement module operable to perform a power measurement of the neighbor cell using the GSM device;
a sub-channel determination module configured to a GSM sub-channel associated with the half-rate traffic channel frames, the GSM sub-channel comprising unallocated channels not used for transmission and reception by the GSM device; and
a network measurement module configured to process the unallocated channels by the GSM device to perform a network measurement within a GSM network.

18. The GSM device of claim 17, wherein the GSM device is configured to decode a frequency channel (FCH) signal acquired by the GSM device from the GSM network.

19. The global system for mobile communications device of claim 18, wherein the network measurement module is configured to perform inter-radio access technology (inter-RAT) measurements.

20. The GSM device of claim 18, wherein the network measurement module is configured to perform received signal strength indicator measurements on third generation cells in the GSM network, while the GSM device is in communication with second generation cells in the GSM network.
